# EUROPEAN PATENT APPLICATION

(11) **EP 3 522 684 A1**
(43) Date of publication of application: **07.08.2019**
(21) Application number: 17855204.8
(22) Date of filing: 27.02.2017
(51) Int. Cl.: H05B 37/02

(54) **ENVIRONMENT CONTROL SYSTEM, ENVIRONMENT CONTROL METHOD, AND PROGRAM**

(30) Priority: 29.09.2016 JP 2016192315
(71) Applicant: Panasonic Intellectual Property Management Co., Ltd., Osaka-shi, Osaka 540-6207 (JP)
(72) Inventor: OOBAYASHI, Fumiaki, Osaka-shi, Osaka 540-6207 (JP); TANIGUCHI, Kazuhiro, Osaka-shi, Osaka 540-6207 (JP); SHIMODA, Hiroshi, Kyoto-shi, Kyoto 606-8501 (JP); ISHII, Hirotake, Kyoto-shi, Kyoto 606-8501 (JP); SHIMONAKA, Shota, Kyoto-shi, Kyoto 606-8501 (JP); SUGITA, Kosuke, Kyoto-shi, Kyoto 606-8501 (JP); UEDA, Kimi, Kyoto-shi, Kyoto 606-8501 (JP); TSUJI, Yuta, Kyoto-shi, Kyoto 606-8501 (JP)
(74) Representative: Appelt, Christian W.
(86) International application number: PCT/JP2017/007376
(87) International publication number: WO 2018/061245

(57) **Abstract**

Provided is an environment control system (1) that controls an environment of a space (3) in which a user (2) performs an intellectual task. The environment control system (1) includes: a controller (110) which performs scene control for reproducing one or more predetermined scenes in the space (3) by controlling one or more luminaires that emit illumination light that illuminates a predetermined area in the space (3) and one or more air conditioning devices that air-condition the space (3). The one or more predetermined scenes include: a concentration scene that causes the user (2) to concentrate on the intellectual task; and a rest scene that eases the concentration of the user (2). The controller (110) switches between concentration scene control for reproducing the concentration scene and rest scene control for reproducing the rest scene when a predetermined condition is satisfied.

## Description

### TECHNICAL FIELD

The present invention relates to an environment control system, an environment control method, and a program that control the environment of a space in which a user performs an intellectual task.

### BACKGROUND ART

Work environments in which intellectual tasks are performed, such as office or academic environments, are desirably environments in which the user performing the intellectual task can easily concentrate. Conventionally, a lighting system is known that can improve a user's level of concentration in a work environment through use of a plurality of lighting devices including a task lighting device and an ambient lighting device (for example, see patent literature (PTL) 1).

### Citation List

### Patent Literature

PTL 1: Japanese Unexamined Patent Application Publication No. 2015-22945

### SUMMARY OF THE INVENTION

### TECHNICAL PROBLEM

However, the user's level of concentration does not necessarily improve by merely preparing a lighting environment such as the above background art prepares. It is desirable to be able to reproduce various scenes, including scenes that create an environment in which the user can easily concentrate, in a space for the user to perform an intellectual task in.

In view of the above, the present invention has an object to provide an environment control system, an environment control method, and a program capable of easily reproducing, at an appropriate timing, a scene that allows a user to easily concentrate, in a space for the user to perform an intellectual task in.

### SOLUTIONS TO PROBLEM

An environment control system according to one aspect of the present invention for achieving the above-described object is an environment control system that controls an environment of a space in which a user performs an intellectual task, and includes: a controller which performs scene control for reproducing one or more predetermined scenes in the space by controlling one or more luminaires that emit illumination light that illuminates a predetermined area in the space and one or more air conditioning devices that air-condition the space. The one or more predetermined scenes include: a concentration scene that causes the user to concentrate on the intellectual task; and a rest scene that eases the concentration of the user. The controller switches between concentration scene control for reproducing the concentration scene and rest scene control for reproducing the rest scene when a predetermined condition is satisfied.

An environment control method according to one aspect of the present invention is an environment control method for controlling an environment of a space in which a user performs an intellectual task, and includes: performing scene control for reproducing one or more predetermined scenes in the space by controlling one or more luminaires that emit illumination light that illuminates a predetermined area in the space and one or more air conditioning devices that air-condition the space. The one or more predetermined scenes include: a concentration scene that causes the user to concentrate on the intellectual task; and a rest scene that eases the concentration of the user. The performing includes switching between concentration scene control for reproducing the concentration scene and rest scene control for reproducing the rest scene when a predetermined condition is satisfied.

Moreover, in one aspect, the present invention can be realized as a program for causing a computer to execute the environment control method described above. Alternatively, in one aspect, the present invention can be realized as a computer-readable recording medium on which the program is recorded.

### ADVANTAGEOUS EFFECT OF INVENTION

With the environment control system, etc., according to the present invention, it is possible to easily reproduce, at an appropriate timing, a scene that allows the user to easily concentrate, in a space for the user to perform an intellectual task in.

### BRIEF DESCRIPTION OF DRAWINGS

FIG. 1 is a side view schematically illustrating a space in which an environment control system according to an embodiment is used.
FIG. 2 is a block diagram illustrating the configuration of the environment control system according to the embodiment.
FIG. 3 is a block diagram illustrating the functional configuration of a control device and an operation terminal in the environment control system according to the embodiment.
FIG. 4 illustrates control conditions for scene control performed by the environment control system according to the embodiment.
FIG. 5A is a side view schematically illustrating a lighting state and an air-conditioning state achieved by concentration scene control performed by the environment control system according to the embodiment.
FIG. 5B is a side view schematically illustrating a lighting state and an air-conditioning state achieved by rest scene control performed by the environment control system according to the embodiment.
FIG. 6 is a flow chart of concentration scene control performed by the environment control system according to the embodiment.
FIG. 7 is a flow chart of operations (environment control method) performed by the environment control system according to the embodiment.
FIG. 8 is a perspective view schematically illustrating a space in which an environment control system according to a variation of the embodiment is used.
FIG. 9A is a top view schematically illustrating a lighting state achieved by concentration scene control performed by the environment control system according to the variation of the embodiment.
FIG. 9B is a front view schematically illustrating a lighting state achieved by concentration scene control performed by the environment control system according to the variation of the embodiment.
FIG. 10A is a top view schematically illustrating a lighting state achieved by rest scene control performed by the environment control system according to the variation of the embodiment.
FIG. 10B is a front view schematically illustrating a lighting state achieved by rest scene control performed by the environment control system according to the variation of the embodiment.

### DESCRIPTION OF EXEMPLARY EMBODIMENT

Hereinafter, an environment control system and an environment control method, etc., according to an embodiment of the present invention will be described with reference to the drawings. Note that the embodiment described below shows a specific example of the present invention. The numerical values, shapes, materials, elements, the arrangement and connection of the elements, steps, order of the steps, etc., in the following embodiment are mere examples, and therefore are not intended to limit the present invention. Therefore, among the elements in the following embodiment, those not recited in any of the independent claims defining the broadest concept of the present invention are described as optional elements.

Note that the drawings are represented schematically and are not necessarily precise illustrations. Accordingly, the drawings are not necessarily to scale. Moreover, in the drawings, elements that are essentially the same share like reference signs. Accordingly, duplicate description is omitted or simplified.

### EMBODIMENT

### (Outline)

First, an outline of the environment control system according to this embodiment will be given.

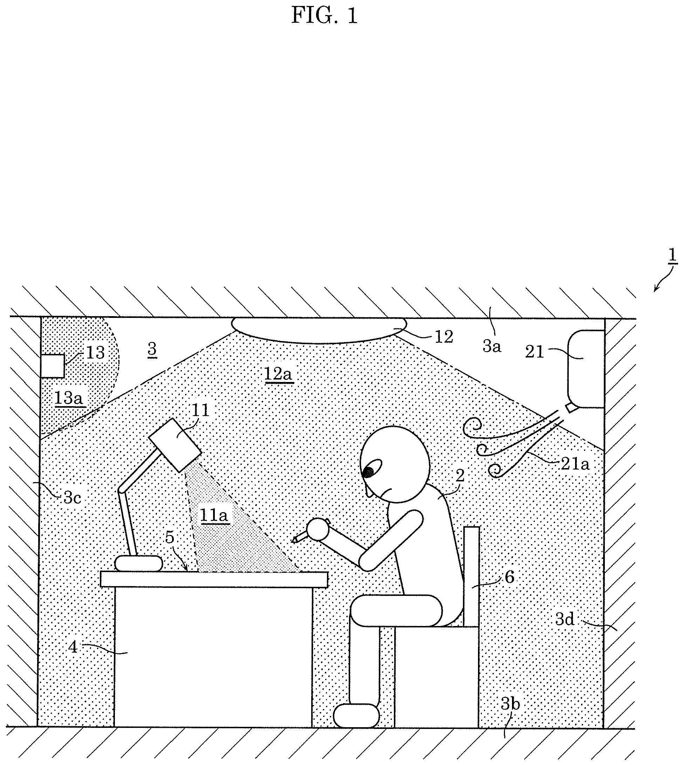

FIG. 1 is a side view schematically illustrating space 3 in which environment control system 1 according to this embodiment is used. Environment control system 1 according to this embodiment is a system that controls the environment of space 3 in which user 2 performs an intellectual task.

For example, user 2 performs an intellectual task at work table 4 illustrated in FIG. 1. An intellectual task is a task that engages the brain, such as work, studying, or reading.

Space 3 is a space for user 2 to perform an intellectual task in. Space 3 is a room in, for example, an office building, cram school, or school, and is a space surrounded by ceiling 3a, floor 3b, and walls 3c and 3d. Work table 4 for user 2 to perform an intellectual task on and chair 6 for user 2 to sit on are provided on floor 3b. For example, work table 4 is a desk including work surface 5. At least a portion of work surface 5 is a work area for an intellectual task.

Note that work table 4 need not be exclusively for performing an intellectual task, such as a study desk or office desk. For example, work table 4 may be a dining table found in a typical home, and in addition to intellectual tasks such as homework, may be used for other tasks, such as eating.

Moreover, work surface 5 may be a virtual surface in the hands of user 2. In an example in which user 2 is reading a book while sitting on, e.g., a sofa, work surface 5 corresponds to a page of the book held by user 2.

As illustrated in FIG. 1, luminaires such as task light 11, ceiling light 12, and indirect light 13, and an air conditioning device such as air conditioner 21 are provided in space 3. Note that these luminaires and air conditioning device need not be provided inside space 3, and may be provided anywhere so long as the lighting state and air-conditioning state of space 3 can be adjusted. For example, the luminaires and air conditioning device may be provided recessed in, e.g., one or more of ceiling 3a, floor 3b, and walls 3c and 3d.

In this example, environment control system 1 reproduces one or more predetermined scenes in space 3 by controlling the environment of space 3. The one or more scenes include a concentration scene that causes user 2 to concentrate on an intellectual task. The concentration scene is a scene that can improve the level of concentration of user 2.

### (Level of Concentration)

In the present specification, "concentration" means user 2 is immersed in an intellectual task. Improving the "level of concentration" corresponds to increasing the sense of immersion of user 2 in an intellectual task. In this sense, "concentration" differs from stimulation that simply makes user 2 more alert or recuperating user 2 from exhaustion.

Next, "level of concentration" will be described. Level of concentration can be quantified, and can be used, for example, as an index for concentration time ratio (described below). Concentration time ratio is the ratio of time spent in a state of concentration to total work time when a person performs an intellectual task.

The concept of concentration time ratio is based on a model including a state in which cognitive resources are allocated to the subject of a task and a state in which cognitive resources are not allocated to the subject of a task, in a period in which a person is performing an intellectual task. In this model, a state in which cognitive resources are allocated to the subject of the task and the task progresses is referred to as a "work state". A state in which the person is resting over a long period of time without allocating cognitive resources to the subject of the task is referred to as "long-term rest". A state in which cognitive resources are allocated to the subject of the task but progression of the task unconsciously stops for a short period of time is referred to as "short-term rest". It is known that short-term rest occurs with a fixed probability for physiological reasons during the work state.

Since the work state and short-term rest are states in which cognitive resources are allocated to the subject of the task, these states can be said to be states of concentration. Since long-term rest is a state in which cognitive resources are not allocated to the subject of the task, this state can be said to be a state of no concentration. Accordingly, by classifying the state of the user into the three states of "work state", "short-term rest", and "long-term rest" or the two states of (i) "work state" and "short-term rest" and (ii) "long-term rest", it is possible to quantify level of concentration.

Next, one example of a method of quantifying level of concentration will be given.

In this example, a technique of calculating a duration of a state of concentration in a predetermined period rather than a technique of measuring the level of concentration in real time is used. In this case, for example, a test subject whose level of concentration is to be measured is presented with multiple problems of similar degrees of difficulty, and the time it takes the test subject to solve each of the problems (hereinafter referred to as "solving time") is measured. Next, the frequency is calculated for each segment into which solving time is segmented, and a histogram (horizontal axis: solving time; vertical axis: frequency) is generated. When the model described above is used, it is estimated that this histogram will show a result in which the state of concentration and the state of no concentration are superimposed.

When an appropriate problem is given, our test results show that the histogram will have two or more peaks. In other words, the histogram will include two or more mountain-like regions. The mountain-like region including the peak representing the shortest solving time is interpreted as representing a state of a mix of the work state and short-term rest, and the mountain-like region including the other peak is interpreted as representing a state of a mix of the work state, short-term rest, and long-term rest. This is because even in a state of concentration, there is a possibility that the solving time will increase due to variation in the degree of difficulty of the problems.

Here, assuming an ideal state in which the degree of difficulty is the same for each problem, it is estimated that the mountain-like regions of the histogram can be approximated using a log-normal distribution probability density function f(t) of solving time t. However, it is not realistically possible to completely eliminate variations in the degree of difficulty of the problems. Thus, the mountain-shaped region including the peak representing the shortest solving time among the two mountain-shaped regions is interpreted such that only the sections of short solving time and sections in the vicinity of the peak coincide with the log-normal distribution probability density function f(x). Then, the parameters (expected value and variance) for the probability density function f(x) are determined so as to approximate these sections.

Once the parameters for the probability density function f(x) are determined, it is possible to calculate the expected value for the solving time. The result obtained by multiplying the calculated expected value by the total number of problems can be interpreted as the time spent in a state of concentration out of the total time beginning when the test subject starts the problem and ending when the test subject solves the problem (i.e., total solving time). Moreover, it is possible to interpret an amount of time calculated by subtracting the time spent in a state of concentration from the total solving time as the amount of time spent in a state of no concentration. Thus, the ratio of time spent in a state of concentration to the total solving time is taken as the concentration time ratio, and one can determine that the higher the concentration time ratio is, the higher the level of concentration is.

The concentration time ratio described above is merely one example of an index for level of concentration; the index of level of concentration may be measured using some other technique that is equivalent to the above-described technique.

With environment control system 1 according to the present embodiment, it is possible to reproduce, in space 3, a concentration scene for improving the level of concentration of user 2 by controlling luminaire group 10 and air conditioning device group 20 in an integrated manner.

### (Configuration)

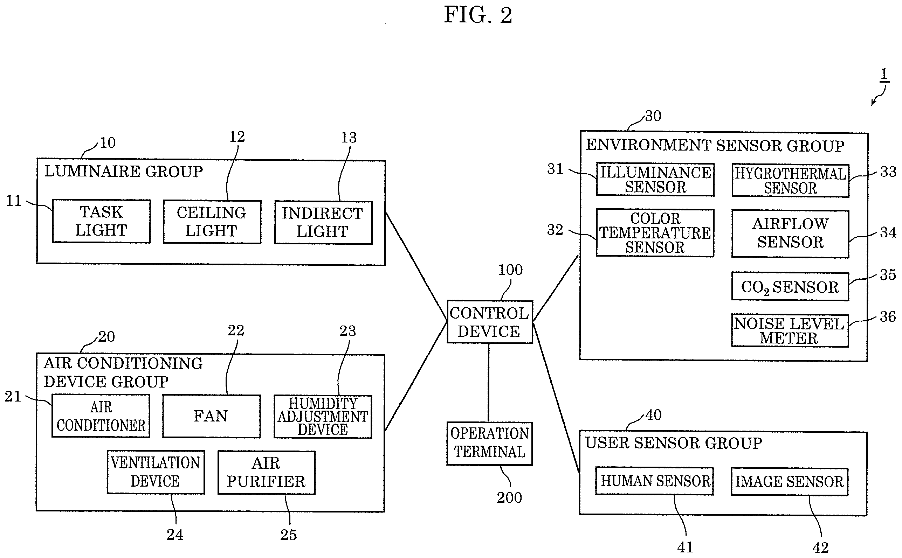

Hereinafter, a detailed configuration of environment control system 1 according to this embodiment will be described with reference to FIG. 2. FIG. 2 is a block diagram illustrating the configuration of environment control system 1 according to this embodiment.

As illustrated in FIG. 2, environment control system 1 includes luminaire group 10, air conditioning device group 20, environment sensor group 30, user sensor group 40, control device 100, and operation terminal 200.

### (Luminaire Group)

Luminaire group 10 includes one or more luminaires that adjust the lighting state of space 3. The one or more luminaires each emit illumination light that illuminates a predetermined area in space 3. In this embodiment, luminaire group 10 includes task light 11, ceiling light 12, and indirect light 13.

Note that the luminaires included in luminaire group 10 are not limited to these examples; other luminaires may be added, luminaires may be exchanged, and luminaires may be removed as necessary.

Task light 11 is one example of a first luminaire that emits first illumination light that illuminates a work area in which user 2 performs an intellectual task. More specifically, as illustrated in FIG. 1, task light 11 is a light that emits illumination light 11a that illuminates work surface 5. Task light 11 is, but not limited to, a light with a stand that is placed on work table 4. Task light 11 may be a spot light provided on ceiling 3a or wall 3c, for example.

Ceiling light 12 is one example of a second luminaire that emits second illumination light that illuminates space 3 in entirety. More specifically, as illustrated in FIG. 1, ceiling light 12 is a light that emits illumination light 12a that illuminates the entire space 3, including work surface 5. Ceiling light 12 is, but not limited to, a ceiling light provided on ceiling 3a. Ceiling light 12 may be a down light or base light recessed in ceiling 3a, for example.

Indirect light 13 is one example of a third luminaire that emits third illumination light that illuminates an area different than the work area. More specifically, as illustrated in FIG. 1, indirect light 13 is a light that emits illumination light 13a that does not illuminate work surface 5 directly, but illuminates, for example, wall 3c and ceiling 3a of space 3. Indirect light 13 is, but not limited to, a bracket light or wall light provided on wall 3c. Indirect light 13 may be a floor light provided on floor 3b.

These luminaires included in luminaire group 10 (i.e., task light 11, ceiling light 12, and indirect light 13) include, for example, light dimming and color adjustment functions. More specifically, these luminaires are connected to control device 100 via a wired or wireless connection, and the turning on, turning off, dimming, and color temperature adjustment of the luminaires are controlled by receipt of a control signal from control device 100. Note that not all luminaires included in luminaire group 10 need to include light dimming and color adjustment functions.

### (Air Conditioning Device Group)

Air conditioning device group 20 includes one or more air conditioning devices that adjust the air-conditioning state of space 3. The one or more air conditioning devices each air-condition space 3. In this embodiment, air conditioning device group 20 includes air conditioner 21, fan 22, humidity adjustment device 23, ventilation device 24, and air purifier 25. Note that the air conditioning devices included in air conditioning device group 20 are not limited to these examples; other air conditioning devices may be added, air conditioning devices may be exchanged, and air conditioning devices may be removed as necessary. Also note that only air conditioner 21 is illustrated in FIG. 1.

Air conditioner 21 adjusts at least one of the temperature, humidity, and airflow in space 3. More specifically, air conditioner 21 adjusts the temperature in space 3 so as to approximate the temperature setting set by control device 100 by supplying a flow of cooled or heated air (airflow 21a) to space 3. Air conditioner 21 also adjusts the humidity in space 3 so as to approximate the humidity setting set by control device 100 by supplying a flow of dry or damp air (airflow 21a) to space 3. Alternatively, air conditioner 21 can also remove the air in space 3 out of space 3 (i.e., ventilates space 3). Air conditioner 21 can also change the strength and direction of airflow 21a supplied to space 3.

As illustrated in FIG. 1, air conditioner 21 is, but not limited to being, provided on wall 3d. Air conditioner 21 may be recessed in, e.g., ceiling 3a. Note that air conditioning device group 20 may include a total heat exchanger instead of air conditioner 21.

Fan 22 is one example of an airflow generating device for generating airflow in space 3. The strength and direction of the airflow generated by fan 22 can be changed. Note that air conditioning device group 20 may include a circulator instead of fan 22 as one example of an airflow generating device.

Humidity adjustment device 23 is a device that adjusts the humidity in space 3, and is, for example, a dehumidifier or humidifier.

Ventilation device 24 is a device that ventilates space 3. Ventilation device 24 adjusts the temperature and humidity in space 3 by replacing the air in space 3 with outside air. Moreover, when the carbon dioxide level of space 3 increases as a result of user 2 being in space 3, ventilation device 24 can reduce the carbon dioxide level by removing air that includes a significant amount of carbon dioxide. The amount of air ventilated per unit time by ventilation device 24 can be adjusted.

Air purifier 25 is a device that purifies the air by removing dust, pollen, house dust, etc., from the air in space 3. Air purifier 25 takes in air from space 3, purifies it, and releases the purified air back into space 3. This allows air purifier 25 to generate airflow in space 3. Air purifier 25 may include a dehumidifying or humidifying function, like humidity adjustment device 23.

These air conditioning devices included in air conditioning device group 20 (i.e., air conditioner 21, fan 22, humidity adjustment device 23, ventilation device 24, and air purifier 25) are connected to control device 100 via a wired or wireless connection, and adjust at least one of the temperature, humidity, and airflow in space 3 based on a control signal from control device 100.

Note that one air conditioning device may control the air-conditioning of space 3 by itself, and, alternatively, two or more of the air conditioning devices may work in cooperation to control the air-conditioning of space 3. For example, air conditioner 21 may adjust each of the temperature, humidity, and airflow in space 3 by itself. Alternatively, air conditioner 21 may adjust mainly the temperature in space 3, humidity adjustment device 23 and ventilation device 24 may adjust mainly the humidity in space 3, and fan 22 may adjust mainly the airflow of space 3. Moreover, for example, airflow in space 3 may be generated by a plurality of air conditioning devices.

### (Environment Sensor Group)

Environment sensor group 30 includes one or more sensors that detect the environment of space 3. In this embodiment, as illustrated in FIG. 2, environment sensor group 30 includes illuminance sensor 31, color temperature sensor 32, hygrothermal sensor 33, airflow sensor 34, carbon dioxide level sensor (CO₂ sensor) 35, and noise level meter 36. Note that the sensors included in environment sensor group 30 are not limited to these examples; other sensors may be added, sensors may be exchanged, and sensors may be removed as necessary. Moreover, although not illustrated in FIG. 1, each of these sensors is attached to ceiling 3a, floor 3b, wall 3c or 3d, work table 4, chair 6, or a luminaire or air conditioning device.

Illuminance sensor 31, for example, is provided on work surface 5 of work table 4, and detects the illuminance of work surface 5.

Color temperature sensor 32, for example, is provided on work table 4, and detects the color temperature of illumination light 11a emitted by task light 11 and the color temperature of illumination light 12a emitted by ceiling light 12.

Hygrothermal sensor 33, for example, is provided on ceiling 3a, wall 3c or 3d, or air conditioner 21, and detects the temperature and humidity in space 3. Note that environment sensor group 30 may include, instead of hygrothermal sensor 33, a temperature sensor that detects only the temperature in space 3, or a humidity sensor that detects only the humidity in space 3.

Airflow sensor 34, for example, is provided on work table 4, and detects the strength of airflow 21a supplied in space 3 by air conditioner 21.

CO₂ sensor 35, for example, is provided on wall 3c or 3d, and detects the carbon dioxide level of space 3.

Noise level meter 36, for example, is provided on wall 3c or 3d or air conditioner 21, and detects the magnitude of noise in space 3.

These sensors included in environment sensor group 30 (i.e., illuminance sensor 31, color temperature sensor 32, hygrothermal sensor 33, airflow sensor 34, CO₂ sensor 35, and noise level meter 36) are connected to control device 100 via a wired or wireless connection, and transmit detection results to control device 100. The detection results may be transmitted automatically-continuously or at regular intervals-and, alternatively, may be transmitted in response to receipt of a request from control device 100.

### (User Sensor Group)

User sensor group 40 includes one or more sensors that detect the state of user 2 in space 3. In this embodiment, as illustrated in FIG. 2, user sensor group 40 includes human sensor 41 and image sensor 42. Note that the sensors included in user sensor group 40 are not limited to these examples; other sensors may be added, sensors may be exchanged, and sensors may be removed as necessary. Moreover, although not illustrated in FIG. 1, each of these sensors is attached to ceiling 3a, floor 3b, wall 3c or 3d, work table 4, or a luminaire or air conditioning device.

Human sensor 41, for example, is provided on ceiling 3a or ceiling light 12, and detects the presence of user 2. Human sensor 41 is, for example, an infrared sensor.

Image sensor 42, for example, is provided on ceiling 3a or ceiling light 12, and detects the presence of user 2. Image sensor 42 may be included in, for example, a surveillance camera (not illustrated in the drawings) for the recording and surveillance of the area inside space 3. Image sensor 42 can detect whether user 2 is near work table 4 or not by recording the area around work table 4 and chair 6. Moreover, it is possible to detect whether user 2 is performing an intellectual task or resting by analyzing the video recorded by image sensor 42.

These sensors included in user sensor group 40 (i.e., human sensor 41 and image sensor 42) are connected to control device 100 via a wired or wireless connection, and transmit detection results to control device 100. The detection results may be transmitted automatically-continuously or at regular intervals-and, alternatively, may be transmitted in response to receipt of a request from control device 100.

User sensor group 40 may include a seat occupancy sensor provided in or on chair 6.

### (Control Device)

Control device 100 is a controller that performs the main operations of environment control system 1. Control device 100 is, for example, a home energy management system (HEMS) controller provided in a home. Control device 100 is implemented as, for example, non-volatile memory that stores a program, volatile memory, which is a temporary storage region, for executing the program, an input/output port, and a processor that executes the program.

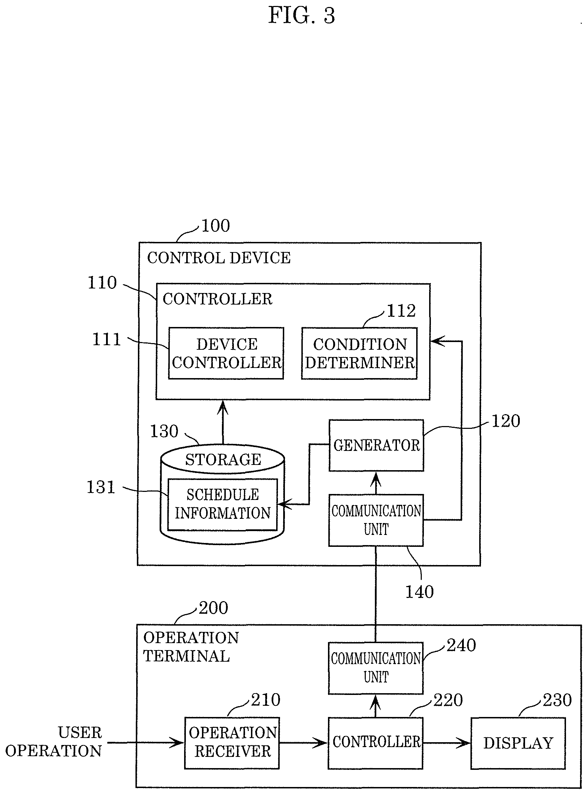

FIG. 3 is a block diagram illustrating the functional configuration of control device 100 and operation terminal 200 in environment control system 1 according to this embodiment. As illustrated in FIG. 3, control device 100 includes controller 110, generator 120, storage 130, and communication unit 140.

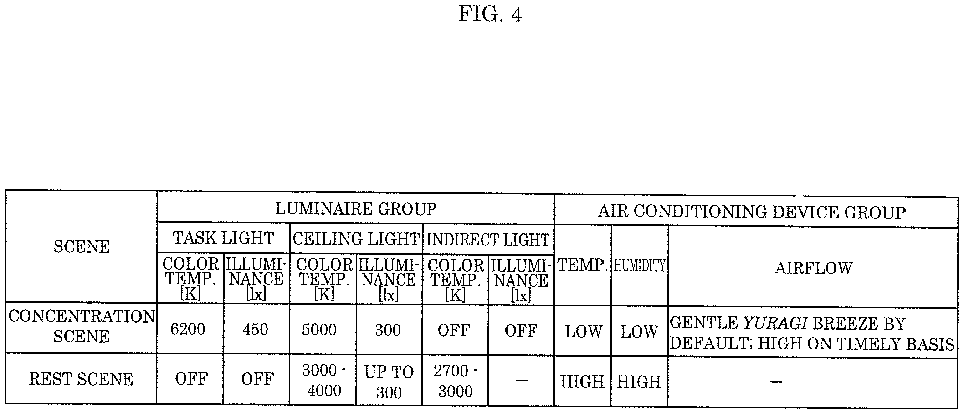

Controller 110 performs scene control for reproducing one or more predetermined scenes in space 3 by controlling luminaire group 10 and air conditioning device group 20. The one or more scenes are each configured of a lighting state and an air-conditioning state of space 3. The one or more scenes include a concentration scene that causes user 2 to concentrate on an intellectual task and a rest scene that eases the concentration of user 2. For example, controller 110 performs scene control via integrated adjustment of (i) the illuminance or color temperature of the illumination light illuminating a predetermined area in space 3 and (ii) at least one of the temperature, humidity, and airflow of space 3. Note that a detailed example of control conditions (setting values) for scene control will be given later with reference to FIG. 4.

Controller 110 switches between concentration scene control for reproducing the concentration scene and rest scene control for reproducing the rest scene when a predetermined condition is satisfied. More specifically, controller 110 switches scene control when a predetermined condition is satisfied. The predetermined condition includes a plurality of conditions, examples of which include a condition based on schedule information 131, a condition based on a user operation made via operation terminal 200, and a condition based on detection results from user sensor group 40. For example, when at least one of the conditions is satisfied, controller 110 switches to a scene control matching the condition.

For example, controller 110 switches between the concentration scene control and the rest scene control at a timing indicated by schedule information 131 as a condition. Alternatively, controller 110 may switch between the concentration scene control and the rest scene control at a predetermined timing based on the day of week and the time of day as a condition. Moreover, controller 110 may switch between the concentration scene control and the rest scene control when user 2 is detected to be present or absent in space 3 as a condition. Detailed situations regarding the switching will be described later.

In this embodiment, as illustrated in FIG. 3, controller 110 includes device controller 111 that controls luminaire group 10 and air conditioning device group 20, and condition determiner 112 that determines whether a switching condition has been satisfied or not.

Device controller 111 controls one or more luminaires included in luminaire group 10 and one or more air conditioning devices included in air conditioning device group 20. In this embodiment, device controller 111 controls task light 11, ceiling light 12, indirect light 13, air conditioner 21, fan 22, humidity adjustment device 23, ventilation device 24, and air purifier 25.

Device controller 111 controls the turning on and off of each of task light 11, ceiling light 12, and indirect light 13. For example, device controller 111 is connected to each of task light 11, ceiling light 12, and indirect light 13 via a wireless or wired connection, and transmits control signals for turning them on or off. Each luminaire turns on or off based on the received control signal.

Moreover, when a luminaire has a dimming function and a color adjustment function, device controller 111 controls the luminaire to adjust the dimming rate (light output) or color temperature of the illumination light emitted by the luminaire. In this embodiment, at least ceiling light 12 has a dimming function and a color adjustment function. Note that task light 11 and indirect light 13 need not include either a diming function or a color adjustment function. Alternatively, task light 11 and indirect light 13 may include one or both of the functions.

For example, device controller 111 controls ceiling light 12 to adjust the illuminance or color temperature of illumination light 12a emitted by ceiling light 12. More specifically, ceiling light 12 transmits, via a wireless or wired connection, a control signal for setting, for example, a light output or color temperature for illumination light 12a to ceiling light 12. The control signal includes, for example, a setting value for the light output or color temperature. Ceiling light 12 emits illumination light 12a in accordance with the setting value(s) included in the received control signal. The illuminance of illumination light 12a emitted by ceiling light 12 is the illuminance of work surface 5 of work table 4.

Moreover, device controller 111 starts operation (i.e., turns on) and stops operation of (i.e., turns off) each of air conditioner 21, fan 22, humidity adjustment device 23, ventilation device 24, and air purifier 25, and controls the functions of each of the air conditioning devices. For example, device controller 111 transmits a control signal to each of air conditioner 21, fan 22, humidity adjustment device 23, ventilation device 24, and air purifier 25 over a wireless or wired connection. The control signal includes, for example, an instruction to turn on or off the corresponding device or setting values for the various functions of the corresponding device.

Whether device controller 111 is to control any of the air conditioning devices included in air conditioning device group 20 can be arbitrarily changed, so long as a desired scene can be reproduced in space 3. For example, in this embodiment, device controller 111 may adjust the temperature, humidity, and airflow of space 3 by controlling only air conditioner 21. Alternatively, device controller 111 may adjust the temperature, humidity, and airflow of space 3 by controlling air conditioner 21 in conjunction with, for example, fan 22 and humidity adjustment device 23, rather than controlling only air conditioner 21. Hereinafter, for the sake of simplicity, an example will be given in which the temperature, humidity, and airflow of space 3 is adjusted by device controller 111 controlling only air conditioner 21.

For example, device controller 111 transmits a control signal for adjusting the temperature, humidity, and airflow 21a of space 3 to air conditioner 21 over a wireless or wired connection. The control signal includes setting values for, e.g., a temperature setting, a humidity setting, and, e.g., the strength and direction of airflow 21a. Air conditioner 21 adjusts the temperature and humidity in space 3 so as to approximate the temperature setting and humidity setting included in the control signal by supplying airflow 21a to space 3. Here, air conditioner 21 adjusts the strength and direction of airflow 21a supplied to space 3 based on the setting values of the strength and direction of airflow 21a included in the control signal.

Condition determiner 112 determines whether the predetermined condition is satisfied or not. More specifically, condition determiner 112 determines whether at least one of a plurality of conditions is satisfied or not.

For example, condition determiner 112 includes a timer function. More specifically, condition determiner 112 determines whether a timing for switching between scene controls as indicated in schedule information 131 generated by generator 120 has been reached. Schedule information 131 is information indicating timings at which to switch between concentration scene control and rest scene control. Condition determiner 112 determines that a condition for switching to a given scene control has been satisfied when the time indicated by the timer (i.e., the current time) reaches the time at which to switch to the given scene control. With this, controller 110 controls each target luminaire and target air conditioning device to be controlled under a given scene control to perform the given scene control.

Schedule information 131 is generated based on the implementation history of concentration scene control and rest scene control. For example, controller 110 can accustom user 2 to an intellectual task by performing scene control based on schedule information 131. For example, by controlling the environment of space 3, it is possible to prompt a child (one example of user 2) to study at a regular time, without them having to be told by, e.g., a parent.

Moreover, condition determiner 112 determines whether an operation signal received from operation terminal 200 via communication unit 140 includes an instruction to switch to a predetermined scene control or not. An operation signal is a signal sent by operation terminal 200 when user 2 uses operation terminal 200 to switch to a predetermined scene control. Condition determiner 112 determines that a condition for switching to a given scene control has been satisfied when the operation signal includes an instruction to switch to the given scene control. With this, controller 110 controls each target luminaire and target air conditioning device to be controlled under a given scene control to perform the given scene control. In this way, it is possible for control device 100 to control the environment of space 3 based on an instruction from user 2.

Condition determiner 112 also determines whether the presence or absence of user 2 in space 3 has been detected or not. For example, condition determiner 112 determines that a condition for switching to the concentration scene control has been satisfied when user 2 is present in the vicinity of work table 4 (e.g., in chair 6) in space 3. Detection of the presence of user 2 is performed by, for example, human sensor 41 or image sensor 42. In this way, controller 110 performs the concentration scene control when user 2 is present in space 3.

In such cases, for example, condition determiner 112 determines that a condition for switching to the concentration scene control has been satisfied when the presence of user 2 is detected in a predetermined location in space 3 at a predetermined time of day. For example, condition determiner 112 sets, in advance, "weekday evenings" (e.g., from 4:00 pm to 6:00 pm) as the time of day in which the concentration scene control can be performed. With this, for example, condition determiner 112 can determine that a condition for switching to the concentration scene control has been satisfied when, for example, a child (one example of user 2) sits in chair 6 after returning home on a weekday. This makes it possible to naturally prompt, e.g., a child to study, via the lighting state and the air-conditioning state.

Alternatively, condition determiner 112 may predetermine a particular time of day at which to prohibit the concentration scene control. Stated differently, condition determiner 112 may predetermine a time of day outside of the particular time of day as a time in which the concentration scene control can be performed. For example, when work table 4 is a dining table or the like, a time of day during which an intellectual task is unscheduled, such as a time of day corresponding to a meal time, may be excluded in advance. This makes it possible to inhibit the concentration scene control from being performed during meal time, for example, thus making it possible to coordinate the scene control with the daily rhythm of user 2, improving user-friendliness.

Moreover, for example, when the presence of user 2 in space 3 ceases being detected, condition determiner 112 determines that a condition for switching to the rest scene control (or some scene control other than concentration scene control) has been satisfied. More specifically, when the presence of user 2 ceases being detected for a predetermined duration of time (for example, 10 minutes or longer), condition determiner 112 determines that a condition for switching to the rest scene control has been satisfied. In this way, controller 110 switches from the concentration scene control to the rest scene control when user 2 is not present in space 3. For example, when user 2 is away from work table 4 for a long period of time, controller 110 can end the concentration scene control to reduce power consumption by luminaire group 10 and air conditioning device group 20.

Generator 120 obtains an implementation history of scene control and generates schedule information 131 based on the obtained implementation history. The generated schedule information 131 is stored in storage 130. In this embodiment, generator 120 is exemplified as obtaining an implementation history of the concentration scene control and the rest scene control, but generator 120 may obtain an implementation history of one or more other scene controls.

The implementation history of a scene control includes cases in which a scene control is implemented as a result of user 2 operating operation terminal 200 and cases in which a scene control is implemented automatically by environment control system 1 via, for example, human sensor 41. Implementation history is generated by collecting information related to implementation of one or more scene controls over a predetermined period of time (for example, one day, one week, one month, one year, etc.). Implementation history is information indicating dates and times to switch scene controls (or scene control starting and ending dates and times). Here, "date and time" includes, for example, the day of the week and the date, as well as hours, minutes, and seconds.

For example, generator 120 extracts the time at which to switch between the concentration scene control and the rest scene control from the implementation history, and generates schedule information 131 indicating that the extracted time is a time at which to switch between the concentration scene control and the rest scene control every day. Alternatively, generator 120 may generate different schedule information 131 for weekdays and weekends. For example, generator 120 may extract times for switching between the concentration scene control and the rest scene control for Monday through Friday from the implementation history, and generate schedule information 131 indicating that the extracted switching times are for weekdays. Note that when the switching times are approximately the same for each day from Monday through Friday (for example, when the times are within 30 minutes of each other), generator 120 may generate schedule information 131 indicating the switching times for weekdays as an average of the switching times for the days from Monday through Friday. Schedule information 131 may be generated each day.

Storage 130 is memory for storing schedule information 131. Storage 130 is implemented as non-volatile memory, such as a hard disk drive (HDD) or semiconductor memory. Storage 130 may store history information indicating an implementation history of scene control.

Schedule information 131 is information indicating timings at which to switch between concentration scene control and rest scene control. Note that schedule information 131 may indicate the start and end times of each of the concentration scene control and the rest scene control, and, alternatively, may indicate a duration for scene control to be performed. In this embodiment, schedule information 131 is exemplified as indicating timings at which to switch between concentration scene control and rest scene control, but schedule information 131 may indicate timings at which to switch to and from other types of scene control.

Schedule information 131 indicates times at which to switch scene controls in a predetermined period of time, such as one day, one week, one month, or one year. When schedule information 131 includes one day's worth of information, controller 110 can switch from the concentration scene control to the rest scene control or from the rest scene control to the concentration scene control at specified times each day, based on schedule information 131.

Note that schedule information 131 may be information determined in advance based on the day of the week and time of day by user 2 rather than being generated based on scene control implementation history. For example, schedule information 131 may be generated by user 2 using operation terminal 200 to specify, for example, a time of day at which to perform a scene control.

For example, user 2 determines the timing for switching scene controls in conjunction with his or her daily rhythm. For example, when user 2 has work or school, a cycle of one hour of concentration scene control and ten minutes of rest scene control may be repeated on busy weekdays. For example, on days off when user 2 is not busy and can concentrate, a cycle of two hours of concentration scene control and ten minutes of rest scene control may be repeated. In this way, user 2 may determine schedule information 131 in advance so that scene control can be performed at different timings and for different periods of time depending on whether the day is a weekday or a day off.

Moreover, for example, a parent can specify a study time for their child, and at the specified time, the concentration scene can be automatically reproduced in space 3. This makes it possible to prompt the child to study at a specified time using the environment of space 3, without the parent having to tell the child. Moreover, by specifying the timing for switching from the concentration scene to the rest scene in advance, the changing of the environment of space 3 can establish an ideal habit of studying or working in user 2.

Communication unit 140 is a communication interface connected via a wired or wireless connection to communication unit 240 in operation terminal 200. Communication unit 140 is also connected to each of luminaire group 10 and air conditioning device group 20 via a wired or wireless connection. Communication unit 140 is implemented as, for example, an antenna and a transceiver circuit.

Each connection between communication unit 140, communication unit 240 in operation terminal 200, each luminaire in luminaire group 10, and each air conditioning device in air conditioning device group 20 may differ in regard to the communication standard used. Each connection is achieved via wireless communication based on a wireless communication standard such as Wi-Fi (registered trademark), Bluetooth (registered trademark), or ZigBee (registered trademark), or via wired communication using, for example, a local area network (LAN) cable or power cable.

In this embodiment, communication unit 140 receives, from communication unit 240, an operation signal based on a user operation received by operation terminal 200. Communication unit 140 transmits, to each of luminaire group 10 and air conditioning device group 20, a control signal generated by controller 110. Communication unit 140 receives detection results from each of environment sensor group 30 and user sensor group 40.

### (Operation Terminal)

Operation terminal 200 is a terminal device that receives an input of an operation from user 2. Operation terminal 200 is, for example, a hand-held device, such as a smartphone, tablet, or laptop computer possessed by user 2. Alternatively, operation terminal 200 may be a dedicated remote control terminal or a stationary computer.

As illustrated in FIG. 3, operation terminal 200 includes operation receiver 210, controller 220, display 230, and communication unit 240.

Operation receiver 210 receives an input of an operation from user 2. More specifically, operation receiver 210 receives an input of a selection of a scene to be reproduced in space 3 from user 2.

Operation receiver 210 is, for example, any kind of input device, such as a pointing device, examples of which include a touch sensor and a mouse; a physical button; or keyboard. Operation receiver 210 and display 230 are implemented as, for example, a touch panel display.

Controller 220 generates an operation signal based on the operation received by operation receiver 210. The operation signal includes information indicating, for example, a scene selected by user 2 and an instruction (or time) to switch to the scene control for reproducing the selected scene. Controller 220 transmits the generated operation signal via communication unit 240.

For example, controller 220 executes an application program that operates the environment control system according to this embodiment. Based on the program, controller 220 generates, for example, a scene selection screen and an operation screen for operating luminaire group 10 or air conditioning device group 20, and displays them on display 230. For example, user 2 can select a desired scene by operating the selection screen displayed on display 230. Operation receiver 210 receives the selection made by user 2 and controller 220 transmits the received operation as an operation signal to control device 100 via communication unit 240. This makes it possible for user 2 to start and stop a scene control at a desired timing.

Display 230 is a display for displaying, for example, the scene selection screen and the operation screen. Display 230 is, for example, a liquid crystal display device or an electroluminescent (EL) display device.

Communication unit 240 is a communication interface connected via a wired or wireless connection to communication unit 140 in control device 100. Communication unit 240 is implemented as, for example, an antenna and a transceiver circuit. Communication unit 240 transmits, for example, the operation signal generated by controller 220 to communication unit 140 in control device 100.

### (Scene Control)

Here, a detailed example of scene control for reproducing one or more scenes as performed by environment control system 1 according to the present embodiment will be given.

FIG. 4 illustrates control conditions for scene control performed by environment control system 1 according to this embodiment. As illustrated in FIG. 4, in this embodiment, the one or more scenes include a concentration scene that causes user 2 to concentrate on an intellectual task and a rest scene that eases the concentration of user 2. The one or more scenes may additionally include a normal scene that is not related to the level of concentration of user 2.

### (Concentration Scene Control)

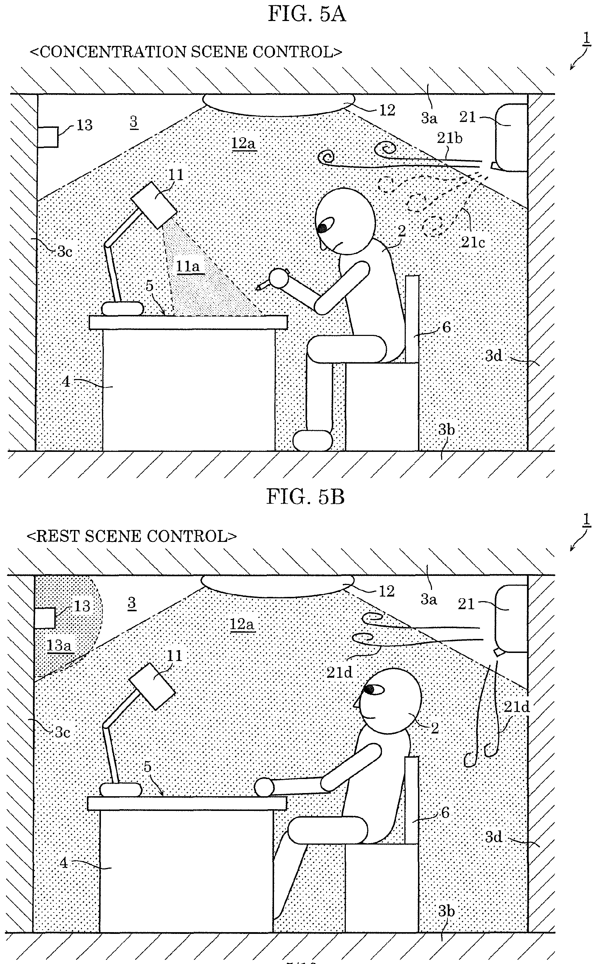

FIG. 5A is a side view schematically illustrating a lighting state and an air-conditioning state achieved by concentration scene control performed by environment control system 1 according to this embodiment.

As illustrated in FIG. 4 and FIG. 5A, under the concentration scene control for reproducing the concentration scene, device controller 111 turns on task light 11 and ceiling light 12 and turns off indirect light 13. In such cases, device controller 111 controls task light 11 and ceiling light 12 so that the color temperature of illumination light 11a emitted by task light 11 is the same as or greater than the color temperature of illumination light 12a emitted by ceiling light 12. The difference between the color temperature of illumination light 11a and the color temperature of illumination light 12a is, for example, 1500 K or less. With this, the difference in color temperature is not too large, and it possible to inhibit differences in color tone of the work area and the surrounding area produced by the lighting, so as not to cause a feeling of strangeness in user 2.

Moreover, device controller 111 controls the light output of task light 11 and ceiling light 12 so as to achieve an illuminance of 750 lx on work surface 5. Here, device controller 111 controls task light 11 and ceiling light 12 so that the illuminance of illumination light 12a emitted by ceiling light 12 is lower than the illuminance of illumination light 11a emitted by task light 11. In other words, under concentration scene control, the illuminance of illumination light 12a in the work area is lower than the illuminance of illumination light 11a.

For example, as illustrated in FIG. 4, device controller 111 sets the color temperature of illumination light 11a emitted by task light 11 to 6200 K, and adjusts the light output of illumination light 11a so as to achieve an illuminance of 450 lx on work surface 5. Device controller 111 sets the color temperature of illumination light 12a emitted by ceiling light 12 to 5000 K, and adjusts the light output of illumination light 12a so as to achieve an illuminance of 300 lx on work surface 5.

Here, the area illuminated by (i.e., the range of emission of) task light 11 on work surface 5 ranges, for example, from an approximately 300 mm long by 420 mm wide (A3 paper size) area to an approximately 420 mm long by 600 mm wide (A2 paper size) area centered on the work area of user 2. Note that this example is not limiting. Note that when user 2 is performing a task not directly on work surface 5 but using, e.g., a monitor placed on work surface 5 (such as working at a computer), device controller 111 may adjust the range of emission of task light 11 so that task light 11 does not interfere with the monitor.

This reduces the surrounding visual noise information and immerses user 2 in the intellectual task by brightening the work area and appropriately dimming the surrounding areas. In other words, it is possible to improve the level of concentration (sense of immersion in an intellectual task) of user 2. Moreover, it is possible to increase the readability of text and increase the alertness of user 2 by increasing the color temperature of illumination light 11a emitted by task light 11.

Note that device controller 111 may adjust the illuminance or color temperature of illumination light emitted by a luminaire based on at least one of illuminance sensor 31 and color temperature sensor 32. For example, since both illumination light 11a from task light 11 and illumination light 12a from ceiling light 12 are emitted onto work surface 5, there is a concern that the illuminance and color temperature will differ from the desired values. By using the detection results from illuminance sensor 31 and color temperature sensor 32, the illuminance or color temperature of illumination light 11a or illumination light 12a can be finely adjusted, making it possible to improve the level of concentration of user 2.

Moreover, under concentration scene control, device controller 111 controls air conditioner 21 to adjust at least one of the temperature, humidity, and airflow in space 3, as illustrated in FIG. 4. More specifically, device controller 111 controls air conditioner 21 so that at least one of the temperature and humidity in space 3 is lower than when concentration scene control is not being performed. For example, under concentration scene control, device controller 111 controls air conditioner 21 so that the temperature and humidity in space 3 is lower than when rest scene control is being performed.

Device controller 111 obtains the temperature and humidity in space 3 detected by hygrothermal sensor 33, and controls air conditioner 21 based on the obtained temperature and humidity. For example, when the temperature obtained from hygrothermal sensor 33 is higher than the temperature setting, device controller 111 causes air conditioner 21 to supply cooled air to space 3. When the temperature obtained from hygrothermal sensor 33 is lower than the temperature setting, device controller 111 causes air conditioner 21 to supply heated air to space 3. The same applies to humidity. The temperature setting and the humidity setting are, for example, predetermined as concentration scene control conditions.

Moreover, as illustrated in FIG. 5A, under concentration scene control, device controller 111 controls air conditioner 21 so that first airflow 21b, characterized by a fluctuating strength, does not directly contact user 2. First airflow 21b is a gentle breeze with a 1/f "Yuragi", or fluctuating pattern.

Here, device controller 111 may determine the location of user 2 based on detection results from human sensor 41 or image sensor 42, and adjust the direction in which first airflow 21b is supplied so first airflow 21b does not contact user 2. Alternatively, since user 2 is anticipated to be sitting in chair 6 when performing an intellectual task, device controller 111 may control air conditioner 21 in such a manner that first airflow 21b does not contact work table 4 and chair 6, regardless of the detection results from human sensor 41 or image sensor 42.

Moreover, after each lapse of a predetermined first period, device controller 111 controls air conditioner 21 for a second period shorter than the first period in such a manner that second airflow 21c, which is stronger than first airflow 21b, contacts user 2. More specifically, every fixed time interval of approximately 10 to 20 minutes, device controller 111 causes air conditioner 21 to supply (generate) the strong second airflow 21c for a short period of time of approximately a few to tens of seconds, in such a manner that second airflow 21c contacts user 2. The maximum value of the strength (i.e., the maximum velocity) of second airflow 21c is, for example, in a range of from and including 0.4 meters per second to 0.7 meters per second. For example, second airflow 21c is generated in such a manner as to contact the head region of user 2 from behind. This makes it possible to refresh user 2 fatigued from concentrating, and thus improve the concentration of user 2 concentrating on an intellectual task.

Here, device controller 111 may cause air conditioner 21 to supply (generate) an even stronger airflow for the purpose of keeping user 2 alert (i.e., to help user 2 stay awake) (hereinafter also referred to as stimulating airflow). For example, the maximum value of the strength (i.e., the maximum velocity) of the stimulating airflow is, for example, in a range of from and including 1.5 meters per second to 3 meters per second. For example, the stimulating airflow may be supplied at the same timing as the airflow for refreshing user 2, or at a different timing.

Note that the method of generating first airflow 21b and second airflow 21c is not limited to the example given above in which air conditioner 21 singularly supplies (generates) the airflow; first airflow 21b and second airflow 21c may be generated by a combination of, for example, air conditioner 21 and fan 22, and may be generated singularly by fan 22.

Device controller 111 may obtain the strength of the airflow in space 3 detected by airflow sensor 34, and control air conditioner 21 based on the obtained airflow strength. For example, it is possible that an obstacle such as furniture may be in space 3 that impedes airflow 21a supplied by air conditioner 21 from heading in the intended direction. Accordingly, using the detection results from airflow sensor 34 makes it possible for device controller 111 to appropriately adjust the direction and strength of airflow 21a.

Moreover, when the carbon dioxide level in space 3 exceeds a predetermined threshold, device controller 111 may control ventilation device 24 so as to reduce the carbon dioxide level to a level below the predetermined threshold. For example, when the carbon dioxide level exceeds the threshold, device controller 111 causes ventilation device 24 to start operating and replaces high carbon dioxide level air in space 3 with low carbon dioxide level air from outside. This makes it possible to reduce the carbon dioxide level in space 3.

Device controller 111 obtains a carbon dioxide level detected by CO₂ sensor 35, and determines whether the obtained carbon dioxide level exceeds the threshold or not. For example, the threshold is, but not limited to, 1000 ppm. For example, the threshold may be 800 ppm.

Device controller 111 may control the operating level of ventilation device 24 (amount of ventilation per unit time) so as to keep the noise level of operating ventilation device 24 at or below a predetermined value. For example, device controller 111 may obtain a noise level detected by noise level meter 36 and determine whether the obtained noise level exceeds the predetermined value or not. When the noise level exceeds the predetermined value, device controller 111 can reduce the noise level by reducing the operating level of ventilation device 24 (or some other device making noise).

Typically, the greater the amount of air that ventilation device 24 ventilates per unit time, the greater the amount of noise that ventilation device 24 produces. Examples of conceivable factors that reduce the level of concentration of user 2 include noise and carbon dioxide level. Accordingly, for example, whether to prioritize control of noise or carbon dioxide level may be determined in advance.

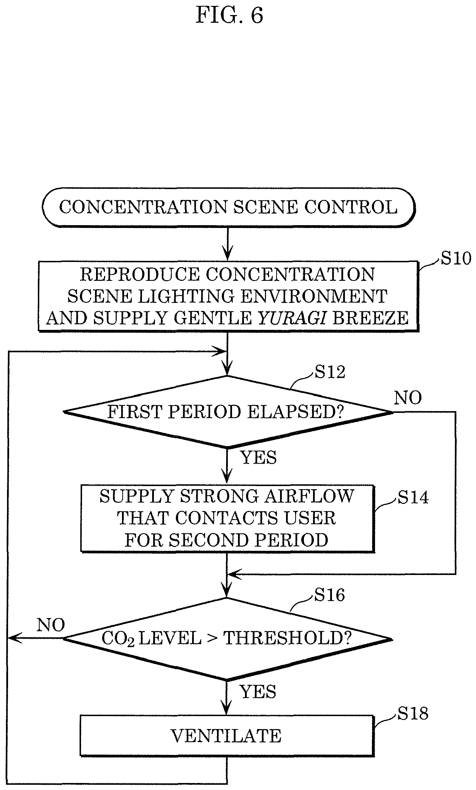

Next, a detailed example of concentration scene control performed by environment control system 1 according to the present embodiment will be given with reference to FIG. 6. FIG. 6 is a flow chart of concentration scene control performed by environment control system 1 according to this embodiment.

First, device controller 111 reproduces the lighting environment for the concentration scene and supplies first airflow 21b, which is the gentle Yuragi breeze (S10). The concentration scene lighting environment is reproduced by, for example, controlling luminaire group 10 based on the control conditions illustrated in FIG. 4. Thereafter, while the concentration scene control is being performed, device controller 111 controls luminaire group 10 so as to maintain the reproduced lighting environment.

When a first period has elapsed since the start of the concentration scene (yes in S12), device controller 111 supplies the strong second airflow 21c so as to contact user 2 for a second period (S14). For example, after 15 minutes has elapsed since the start of the concentration scene, device controller 111 controls air conditioner 21 so to supply strong second airflow 21c that contacts and refreshes user 2 for approximately 10 seconds.

Next, device controller 111 determines whether the obtained carbon dioxide level in space 3 exceeds a threshold or not (S16). More specifically, device controller 111 obtains a carbon dioxide level detected by CO₂ sensor 35, and determines whether the obtained carbon dioxide level exceeds 1000 ppm or not.

If the carbon dioxide level of space 3 does not exceed the threshold (no in S16), processing returns to step S12 and once again waits for the first period to elapse. This makes it possible to, when supplying first airflow 21b that does not contact user 2, supply second airflow 21c that contacts user 2 each time a fixed period of time elapses. Note that the first period, based on which second airflow 21c is cyclically supplied, may be a constant length, and, alternatively, may differ each cycle. Note that the second period, which is the period during which second airflow 21c is supplied, may be a constant length, and, alternatively, may differ each cycle.

If the carbon dioxide level of space 3 exceeds the threshold (yes in S16), device controller 111 ventilates space 3 by controlling ventilation device 24 (S18). This makes it possible to reduce the carbon dioxide level of space 3 by replacing high carbon dioxide level air in space 3 with low carbon dioxide level air from outside. If the first period elapses after or during ventilation (yes in S12), device controller 111 supplies second airflow 21c by controlling air conditioner 21.

Although the carbon dioxide level determination (S16) is performed after step S14 in this example, the order is not limited to this example. The carbon dioxide level determination may be repeatedly performed at regular intervals. The carbon dioxide level determination may also be performed at the same time as the ventilation and the supply of second airflow 21c.

Moreover, the ventilation is exemplified as, but not limited to, being performed by ventilation device 24. The ventilation may be performed by different air conditioning device, such as air conditioner 21. Moreover, device controller 111 may ventilate space 3 by opening a door or window provided in wall 3c or 3d, for example.

### (Rest Scene Control)

FIG. 5B is a side view schematically illustrating a lighting state and an air-conditioning state achieved by rest scene control performed by environment control system 1 according to this embodiment.

As illustrated in FIG. 4 and FIG. 5B, under the rest scene control for reproducing the rest scene, device controller 111 turns off task light 11 and turns on ceiling light 12 and indirect light 13. In such cases, device controller 111 reduces the color temperature and illuminance of illumination light 12a emitted by ceiling light 12 lower than the color temperature and illuminance of illumination light 12a during concentration scene control.

For example, as illustrated in FIG. 4, device controller 111 adjusts the color temperature of illumination light 12a emitted by ceiling light 12 a value in a range of from and including 3000 K to 4000 K, and adjusts the light output of illumination light 12a so as to achieve an illuminance of 300 lx or less on work surface 5. This makes it possible to place user 2 in a state of low alertness, which psychologically shifts user 2 from the concentration scene to relax user 2.

Moreover, device controller 111 turns on indirect light 13 to make space 3 appear larger. For example, as illustrated in FIG. 4, device controller 111 adjusts the color temperature of illumination light 13a emitted by indirect light 13 to a value within a range of from and including 2700 K to 3000 K. The light output of indirect light 13 is not particularly limited; for example, the light output may be a value lower than the light output of ceiling light 12. More specifically, the brightness of indirect light 13 may be of a degree whereby user 2 can recognize that a surface of space 3, such as wall 3c and/or ceiling 3a, is illuminated. The range of emission of illumination light 13a from indirect light 13 is not particularly limited either; the range of emission may be to an extent whereby illumination light 13a comes into the field of vision of user 2 while user 2 is resting. In other words, illumination light 13a from indirect light 13 need not illuminate work surface 5.

Moreover, under rest scene control, device controller 111 controls air conditioner 21 to adjust the temperature, humidity, and airflow in space 3, as illustrated in FIG. 4. More specifically, device controller 111 controls air conditioner 21 so that at least one of the temperature and humidity in space 3 is higher than when concentration scene control is being performed. For example, under rest scene control, device controller 111 controls air conditioner 21 so that the temperature and humidity in space 3 is higher than when concentration scene control is being performed.

For example, under rest scene control, device controller 111 increases at least one of the temperature setting and humidity setting of air conditioner 21 higher than when concentration scene control is being performed. Here, device controller 111 adjusts the temperature setting so that the rate of increase in the temperature in space 3 is slower than a predetermined value. Here, the predetermined value can be set to, for example, 2 degrees Celsius per minute. More specifically, device controller 111 increases the temperature setting in stages from a first temperature setting for concentration scene control to a second temperature setting for rest scene control.

For example, directly after switching to rest scene control, device controller 111 adjusts the temperature setting by increasing the first temperature setting by a predetermined value (for example, 1 degree Celsius). After a predetermined period (for example 10 minutes) has elapsed since switching to the rest scene control, the temperature setting is once again further increased by a predetermined value. Device controller 111 can increase the temperature in space 3 in stages by repeating this until the temperature setting reaches the second temperature setting.

Moreover, as illustrated in FIG. 5B, device controller 111 supplies airflow 21d to space 3. For example, device controller 111 causes air conditioner 21 to supply airflow 21d in a manner such that airflow 21d does not contact user 2. Here, the strength, for example, of airflow 21d is not particularly limited. For example, airflow 21d may be a gentle breeze with a 1/f Yuragi, just like first airflow 21b.

Note that the air-conditioning state in the concentration scene and the rest scene can be represented using the predicted mean vote (PMV), which is one index for evaluating a thermal environment. For example, the concentration scene is an environment in a range of from and including 0 to -1 on the PMV scale and the rest scene is an environment in a range of from and including 0 to +1 on the PMV scale. The normal scene is an environment of approximately 0 on the PMV scale. For each scene control, device controller 111 may adjust the temperature, humidity, and airflow so that the PMV satisfies a range for the corresponding scene control.

### (Operations (Environment Control Method))

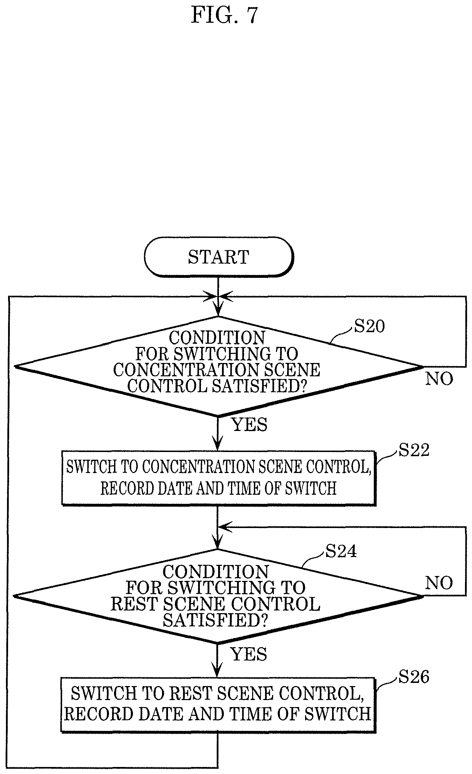

Hereinafter, operations (the environment control method) performed by environment control system 1 according to this embodiment will be described with reference to FIG. 7. FIG. 7 is a flow chart of operations (the environment control method) performed by environment control system 1 according to this embodiment.

As illustrated in FIG. 7, first, condition determiner 112 in control device 100 determines whether a condition for switching to concentration scene control has been satisfied or not (S20). In this embodiment, the condition for switching to concentration scene control includes a plurality of conditions.

More specifically, the condition for switching to concentration scene control includes: (i) that the timing for switching to concentration scene control as indicated in schedule information 131 has been reached; (ii) that presence of user 2 in space 3 has been detected; and (iii) that an instruction to switch to concentration scene control is included in an operation signal. Condition determiner 112 determines that the switching condition has been satisfied when at least one of these conditions is satisfied.

When the switching condition is satisfied (yes in S20), controller 110 switches to concentration scene control and records the date and time of the switch (S22).

More specifically, device controller 111 controls luminaire group 10 and air conditioning device group 20 in an integrated manner so as to reproduce the concentration scene in space 3. For example, device controller 111 controls the on/off states and adjusts various functions of luminaire group 10 and air conditioning device group 20 based on the control conditions for concentration scene control illustrated in FIG. 4. Specifics regarding the operations performed under concentration scene control are as previously described with reference to FIG. 5A and FIG. 6.

Here, generator 120 stores history information indicating the date and time of the switch in storage 130. Alternatively, generator 120 may update schedule information 131 stored in storage 130 based on the date and time of the switch, instead of storing history information in storage 130.

If the switching condition is not satisfied (no in S20), controller 110 waits until the switching condition is satisfied Note that while waiting, controller 110 may perform some other scene control such as rest scene control, and, alternatively, may not perform any scene control. For example, device controller 111 may stop operation of all devices included in luminaire group 10 and air conditioning device group 20.

While performing concentration scene control, condition determiner 112 determines whether a condition for switching from concentration scene control to rest scene control has been satisfied or not (S24). In this embodiment, the condition for switching to rest scene control includes a plurality of conditions.

More specifically, the condition for switching to rest scene control includes: (i) that the timing for switching to rest scene control as indicated in schedule information 131 has been reached; (ii) that presence of user 2 in space 3 has ceased being detected; and (iii) that an instruction to switch to rest scene control is included in an operation signal. Condition determiner 112 determines that the switching condition has been satisfied when at least one of these conditions is satisfied.

When a condition for switching from concentration scene control to rest scene control is satisfied (yes in S24), controller 110 switches to rest scene control and records the date and time of the switch (S26). Specifics regarding the process for recording the date and time of the switch are the same as described regarding step S22.

Specifically, device controller 111 controls luminaire group 10 and air conditioning device group 20 in an integrated manner so as to stop concentration scene control and reproduce the rest scene in space 3. For example, device controller 111 controls the on/off states and adjusts various functions of luminaire group 10 and air conditioning device group 20 based on the control conditions for rest scene control illustrated in FIG. 4.

After switching to rest scene control, processing returns to step S20, where condition determiner 112 determines whether a condition for switching to concentration scene control has been satisfied or not while performing rest scene control. Subsequent processes are the same as described above.

If the switching condition is not satisfied (no in S24), controller 110 waits until the switching condition is satisfied While waiting, controller 110 continues performing rest scene control.

Note that when the one or more scenes also include a scene other than the concentration scene and the rest scene, when a condition for switching to scene control for reproducing that scene is satisfied, controller 110 may switch to that scene control. In other words, when a condition for switching to any one of a plurality of scene controls is satisfied, controller 110 may switch from a current scene control to another scene control corresponding to the condition satisfied.

In this embodiment, controller 110 records the date and time of a switch between the concentration scene control and the rest scene control in steps S22 and S26. This allows controller 110 to record an implementation history of concentration scene control and an implementation history of rest scene control. These implementation histories are used in the generation of schedule information 131.

### (Advantageous Effects, etc.)

As described above, environment control system 1 according to the present embodiment is an environment control system that controls an environment of space 3 in which user 2 performs an intellectual task. Environment control system 1 includes: controller 110 which performs scene control for reproducing one or more predetermined scenes in space 3 by controlling one or more luminaires (luminaire group 10) that emit illumination light that illuminates a predetermined area in space 3 and one or more air conditioning devices (air conditioning device group 20) that air-condition space 3. The one or more predetermined scenes include: a concentration scene that causes user 2 to concentrate on the intellectual task; and a rest scene that eases the concentration of user 2. Controller 110 switches between concentration scene control for reproducing the concentration scene and rest scene control for reproducing the rest scene when a predetermined condition is satisfied.

With this configuration, it is possible to easily reproduce, at an appropriate timing, a scene that allows user 2 to easily concentrate, in space 3 for user 2 to perform an intellectual task in. For example, the level of concentration of user 2 can be improved by reproducing a concentration scene in space 3. Since the air-conditioning state is adjusted in addition to the lighting state, it is possible to further improve the level of concentration of user 2.

Moreover, since scene control is switched between concentration scene control and rest scene control when a predetermined condition is satisfied, it is possible to execute rest scene control when, for example, user 2 is not performing an intellectual task. Accordingly, since scene control can be switched in accordance with the state of user 2, a system that is highly user friendly to user 2 can be achieved. For example, when user 2 predefines a switching condition, scenes can be switched at a timing desired by user 2.

Moreover, for example, luminaire group 10 includes: a first luminaire (e.g., task light 11) that emits first illumination light that illuminates a work area in which user 2 performs the intellectual task; and a second luminaire (e.g., ceiling light 12) that emits second illumination light that illuminates space 3 in entirety. Controller 110: causes task light 11 to emit illumination light 11a and ceiling light 12 to emit illumination light 12a under the concentration scene control; and causes task light 11 to not emit illumination light 11a and ceiling light 12 to emit illumination light 12a under the rest scene control.

Moreover, for example, under concentration scene control, the illuminance of illumination light 12a in the work area is lower than the illuminance of illumination light 11a in the work area.

For example, by brightening the work area and appropriately dimming the surrounding areas in the concentration scene, the surrounding visual noise information can be reduced and it is easier to immerse user 2 in the intellectual task. In other words, it is possible to improve the level of concentration (sense of immersion in an intellectual task) of user 2. On the other hand, since the color temperature of illumination light 12a from ceiling light 12 is lower in the rest scene than in the concentration scene, space 3 appears larger, psychologically giving user 2 a sense of openness.

Moreover, for example, luminaire group 10 further includes a third luminaire (e.g., indirect light 13) that emits third illumination light that illuminates an area other than the work area, and under the rest scene control, controller 110 causes indirect light 13 to emit illumination light 13a.

This makes it possible to further make space 3 appear larger in the rest scene by using indirect light 13.

Moreover, for example, controller 110 sets a color temperature of the illumination light lower for the rest scene control than for the concentration scene control.

This makes it possible to reduce the alertness of user 2 and further relax user 2 in the rest scene.

Moreover, for example, air conditioning device group 20 include an air conditioning device that adjusts a temperature in space 3 (e.g., air conditioner 21), and controller 110 sets a temperature setting of air conditioner 21 higher for the rest scene control than for the concentration scene control.

This makes it possible to ease the concentration of user 2 and further relax user 2 in the rest scene.

Moreover, for example, under the rest scene control, controller 110 adjusts the temperature setting to maintain a rate of increase in the temperature in space 3 below a predetermined value.

This makes it possible to inhibit a sudden increase in the temperature in space 3 after a switch from the concentration scene to the rest scene. This in turn makes it possible to allow user 2 to gradually get used to the change in environment, which naturally reduces the level of alertness of user 2 and further relaxes user 2.

Moreover, for example, air conditioning device group 20 includes an air conditioning device that adjusts a humidity in space 3 (e.g., air conditioner 21), and controller 110 sets a humidity setting of air conditioner 21 higher for the rest scene control than for the concentration scene control.

This makes it possible to ease the concentration of user 2 and further relax user 2 in the rest scene.

Moreover, for example, air conditioning device group 20 includes an air conditioning device that generates airflow in space 3 (e.g., air conditioner 21), and under the rest scene control, controller 110 causes the air conditioner 21 to generate airflow that does not directly contact user 2.

This makes it possible to ease the concentration of user 2 and further relax user 2 in the rest scene.

Moreover, for example, environment control system 1 further includes: generator 120 that obtains an implementation history of the concentration scene control and the rest scene control, and, based on the implementation history, generates schedule information 131 indicating a timing for switching between the concentration scene control and the rest scene control. Controller 110 switches between the concentration scene control and the rest scene control at the timing indicated by schedule information 131 as the predetermined condition.

This makes it possible to accustom user 2 to performing an intellectual task.

Moreover, for example, controller 110 may switch between the concentration scene control and the rest scene control at a predetermined timing based on a day of week and a time of day as the predetermined condition.

This makes it possible to accustom user 2 to performing an intellectual task. Moreover, for example, since scene control can be switched based on different conditions depending on whether it is a weekday or a day off, it is possible to perform scene control that is tailored to the daily rhythm of user 2.

Moreover, controller 110 may switch between the concentration scene control and the rest scene control when user 2 is detected to be present or absent in space 3 as a condition.

For example, this makes it possible to perform concentration scene control with certainty when user 2 is present since it is possible to perform concentration scene control when the presence of user 2 is detected.

Moreover, for example, an environment control method according to the present embodiment is an environment control method for controlling an environment of space 3 in which user 2 performs an intellectual task, and includes: performing scene control for reproducing one or more predetermined scenes in space 3 by controlling one or more luminaires (luminaire group 10) that emit illumination light that illuminates a predetermined area in space 3 and one or more air conditioning devices (air conditioning device group 20) that air-condition space 3. The one or more predetermined scenes include: a concentration scene that causes user 2 to concentrate on the intellectual task; and a rest scene that eases the concentration of user 2. The performing includes switching between concentration scene control for reproducing the concentration scene and rest scene control for reproducing the rest scene when a predetermined condition is satisfied.

This makes it possible to easily reproduce a scene that allows user 2 to easily concentrate, in space 3 for user 2 to perform an intellectual task in. For example, the level of concentration of user 2 can be improved by reproducing a concentration scene in space 3. Since the air-conditioning state is adjusted in addition to the lighting state, it is possible to further improve the level of concentration of user 2.

Moreover, since scene control is switched between concentration scene control and rest scene control when a predetermined condition is satisfied, it is possible to execute rest scene control when, for example, user 2 is not performing an intellectual task.

### VARIATION

Hereinafter, a variation of the above embodiment will be described.

In the above embodiment, space 3 is exemplified as one room, but in this variation, an example will be given in which a plurality of spaces 3 are provided in one room. Note that the description of this variation will focus on the points of difference with the above embodiment, and points in common may be omitted or simplified.

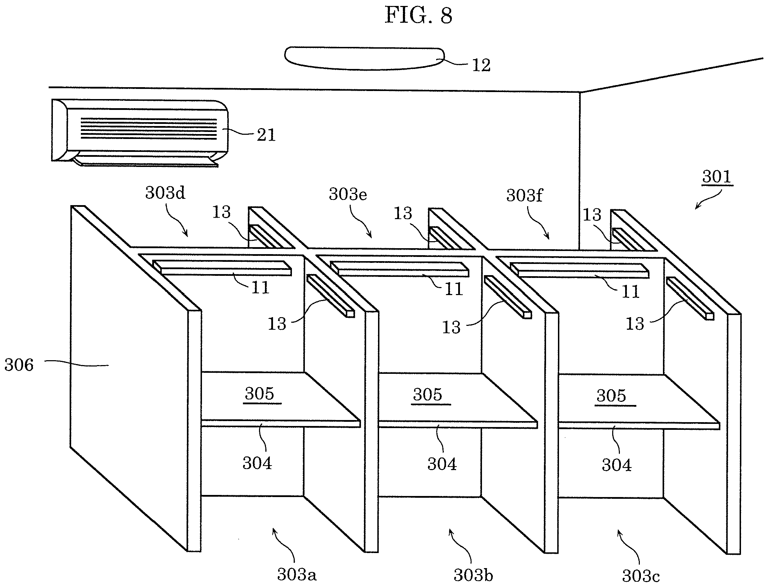

FIG. 8 is a perspective view schematically illustrating spaces 303a through 303f in which environment control system 1 according to this variation is used.

As illustrated in FIG. 8, environment control system 1 controls each of the environments of the six spaces 303a through 303f. Spaces 303a through 303f are formed by dividing one large space 301 (specifically, one room) with walls (partition walls) 306. More specifically, spaces 303a through 303f are individual booths provided in, for example, a study room or library. Note that the number of spaces whose environments are to be controlled by environment control system 1 is not limited to six, and may be two or more.

The configuration of environment control system 1 according to this variation is as described in the embodiment above (see FIG. 2 and FIG. 3). In this variation, environment control system 1 controls the environments of the six spaces 303a through 303f, not the environment of one space 3. More specifically, environment control system 1 performs scene control in each of spaces 303a through 303f. Stated differently, in this variation, different scene controls can be performed in each of the spaces.

Since spaces 303a through 303f are individual booths, the times at which users 2 start an intellectual task often vary from space to space. Accordingly, across spaces 303a through 303f, concentration scene control and rest scene control are performed mutually independent from one another. More specifically, the start time for concentration scene control varies from space to space.

Note that spaces 303a through 303f are not completely separated from each other; a portion of the spaces (for example, the top portion) are connected to one another. Accordingly, the environment of one of spaces 303a through 303f may affect an adjacent space.

In this variation, each of spaces 303a through 303f is provided with work table 304 including work surface 305, task light 11 that emits illumination light that illuminates work surface 305, and indirect light 13 that emits illumination light that illuminates the wall surface of partition wall 306. This makes it possible to adjust the lighting state of each of spaces 303a through 303f individually via task lights 11 and indirect lights 13.

On the other hand, ceiling light 12 is provided on the ceiling so as to emit illumination light that collectively illuminates spaces 303a through 303f. In other words, in this variation, illumination light 12a emitted by ceiling light 12 is light that substantially evenly illuminates work surfaces 305 of spaces 303a through 303f. Accordingly, the illuminance and color temperature of work surface 305 of each space is approximately the same. Note that ceiling light 12 may individually illuminate each of spaces 303a through 303f.

Moreover, air conditioner 21 is provided on a wall of the room so as to collectively adjust the temperature and humidity in spaces 303a through 303f. Air conditioner 21 may individually supply airflow to each of spaces 303a through 303f since it is possible for air conditioner 21 to change the direction of the supplied airflow.

Moreover, although not illustrated in the drawings, each of spaces 303a through 303f may be provided with their own air conditioning device (for example, a desktop fan). The individual air conditioning devices are for adjusting the air-conditioning state of the space in which they are provided, without substantially affecting the air-conditioning state of another space.

### (Scene Control)

Hereinafter, a specific example of scene control for one of the spaces will be given.

### (Concentration Scene Control)

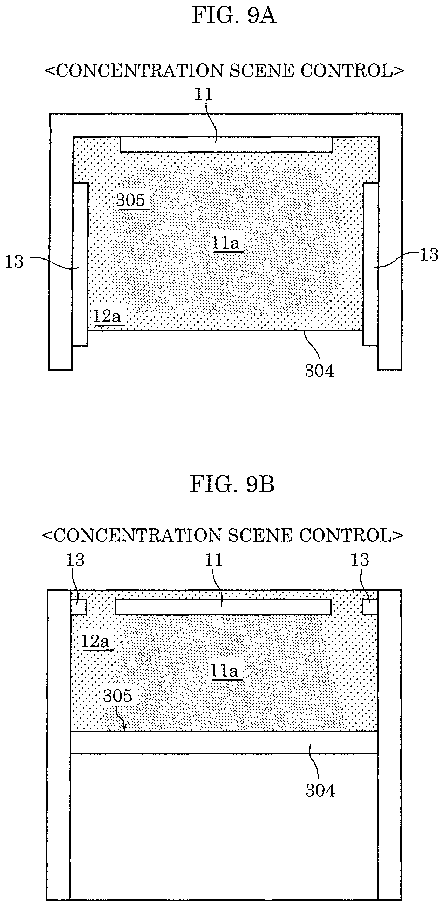

FIG. 9A and FIG. 9B are top and front views schematically illustrating a lighting state achieved by concentration scene control performed by environment control system 1 according to this variation. FIG. 9A and FIG. 9B illustrate one of spaces 303a through 303f.

For example, in this variation, concentration scene control starts based on a detection result from, for example, image sensor 42. For example, when user 2 is detected as being present in space 303a, concentration scene control starts in space 303a. Different scene control, such as rest scene control, may be performed in spaces 303b through 303f not occupied by user 2. Alternatively, scene control may not be performed.

As illustrated in FIG. 9A and FIG. 9B, under the concentration scene control, device controller 111 turns on task light 11 and ceiling light 12, and turns off indirect light 13. The lighting conditions for task light 11 are, for example, as described in the above embodiment and illustrated in FIG. 4.

There are instances in which the concentration scene control is also being performed in another space. Accordingly, device controller 111 causes ceiling light 12 that collectively illuminates spaces 303a through 303f to emit illumination light 12a according to the control conditions for rest scene control illustrated in FIG. 4. Alternatively, device controller 111 may cause ceiling light 12 to emit illumination light 12a at values intermediate between the control conditions for concentration scene control and the control conditions for rest scene control. For example, device controller 111 sets the color temperature of illumination light 12a emitted by ceiling light 12 to a value in a range of from and including 4000 K to 5000 K, and adjusts the light output of illumination light 12a so as to achieve an illuminance of 300 lx on work surface 305.

For example, just like in the above embodiment, under concentration scene control, device controller 111 supplies (generates), by controlling air conditioner 21, first airflow 21b characterized by fluctuating strength. On the assumption that users 2 are present in all spaces 303a through 303f, device controller 111 causes air conditioner 21 to supply first airflow 21b in such a manner as to not contact any of users 2. Alternatively, the position of users 2 in space 301 may be detected by, for example, image sensor 42, and device controller 111 may cause air conditioner 21 to supply first airflow 21b so as to avoid the positions of users 2 indicated in the detection results. This makes it possible to supply first airflow 21b that does not contact any of the plurality of users 2 present in space 301.

Moreover, after each lapse of the first period, device controller 111 may supply second airflow 21c so as to contact user 2 for a second period, by controlling, for example, air conditioner 21 or tabletop fans (not illustrated in the drawings) provided in each of spaces 303a through 303f. Device controller 111 may cause air conditioner 21 to individually supply second airflow 21c to each of spaces 303a through 303f at their corresponding scene control start times.

Note that in this variation, it is difficult to adjust the temperature and humidity in each space individually since spaces 303a through 303f are not completely separated from each other. Accordingly, for example, device controller 111 adjusts the temperature and humidity in spaces 303a through 303f so to achieve intermediate values between the control conditions for concentration scene control and the control conditions for rest scene control illustrated in FIG. 4. Alternatively, device controller 111 may air-condition each space when device controller 111 can individually control the temperature and humidity in each of spaces 303a through 303f, such as when humidity adjustment devices 23 (for example, tabletop humidifiers) are disposed in each of spaces 303a through 303f.

### (Rest Scene Control)

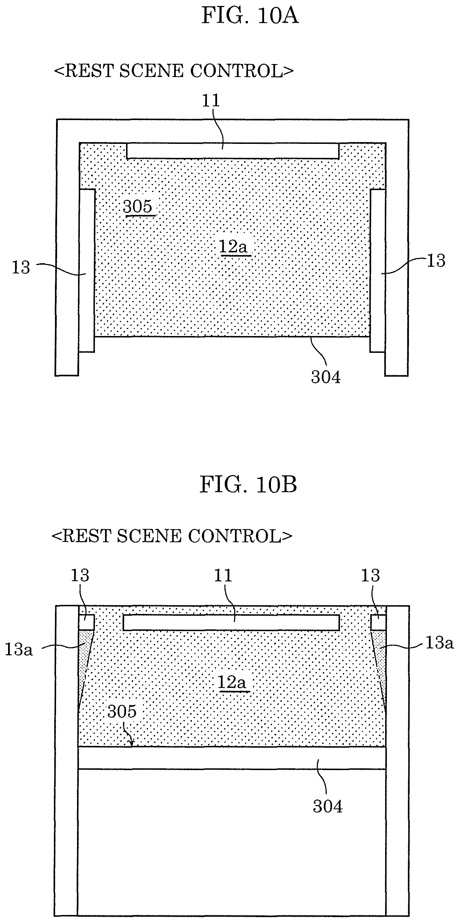

FIG. 10A and FIG. 10B are top and front views schematically illustrating a lighting state achieved by rest scene control performed by environment control system 1 according to this variation. FIG. 10A and FIG. 10B illustrate one of spaces 303a through 303f.

As illustrated in FIG. 10A and FIG. 10B, under the rest scene control, device controller 111 turns off task light 11 and turns on ceiling light 12 and indirect light 13. The lighting conditions for indirect light 13 are, for example, as described in the above embodiment and illustrated in FIG. 4. Alternatively, in this variation, indirect light 13 is provided on partition wall 306 in each space, in a location near work surface 305. Accordingly, since indirect light 13 is located near user 2 at rest near work table 304, the range of emission and illuminance of indirect light 13 may be small compared to in the above embodiment.

Moreover, in this variation, since ceiling light 12 cannot individually illuminate each of spaces 303a through 303f, device controller 111 may control ceiling light 12 so as to emit illumination light 12a at values intermediate between the control conditions for concentration scene control and the control conditions for rest scene control. More specifically, in this variation, the illuminance and color temperature of illumination light 12a from ceiling light 12 may be the same in both concentration scene control and rest scene control.

### (Other Comments)

Although the environment control system and the environment control method according to the present invention have been described based on the above embodiment and variation thereof, the present invention is not limited to the above embodiment.

For example, in the above embodiment, control device 100 is exemplified as performing the main operations of environment control system 1, but the operations performed by control device 100 can be decentralized using, for example, a plurality of computers. For example, control device 100 may be implemented as a plurality of computers connected over a network (i.e., as a cloud server).

Moreover, for example, control device 100 and operation terminal 200 may be integrated as a single device, such as a controller (for example, a HEMS controller) attached to, for example, a wall inside a residence.

Moreover, for example, in the above embodiment, controller 110 is exemplified as controlling luminaire group 10 and air conditioning device group 20, but controller 110 may also control some other device capable of changing the environment of space 3. For example, controller 110 may control a natural lighting device such as electric blinds.

More specifically, controller 110 controls the opening and closing of the electric blinds in accordance with the time of day to adjust the amount of outside light that enters. The outside light can be used to supplement the illumination light emitted by luminaire group 10. This makes it possible to reduce the light output of luminaire group 10 and reduce power consumption.

Each element in the above embodiments may be implemented as dedicated hardware, or by executing a software program suitable for the element. Each element may be implemented by a program executing unit, such as a central processing unit (CPU) or processor, reading and executing the software program recorded on a recording medium such as a hard disk or a semiconductor memory.

The present invention can be implemented not only as, for example, the environment control system or a control device, but as a program including processes performed by each of the elements as steps, and as a computer-readable recording medium, such as a digital versatile disc (DVD), on which the program is recorded, as well.

In other words, the above-described general or specific aspect may be implemented via a system, device, integrated circuit, computer program, or computer-readable recording medium, or any combination thereof.

Embodiments obtained through various modifications to the embodiments which may be conceived by a person skilled in the art as well as embodiments realized by arbitrarily combining elements and functions of the embodiments without materially departing from the principle of the present invention are included in the present invention.

### REFERENCE MARKS IN THE DRAWINGS

- 1: environment control system
- 2: user
- 3, 303a, 303b, 303c, 303d, 303e, 303f: space
- 11: task light (luminaire)
- 11a, 12a, 13a: illumination light
- 12: ceiling light (luminaire)
- 13: indirect light (luminaire)
- 21: air conditioner (air conditioning device)
- 21a, 21d: airflow
- 21b: first airflow
- 21c: second airflow
- 22: fan (air conditioning device)
- 23: humidity adjustment device (air conditioning device)
- 24: ventilation device (air conditioning device)
- 25: air purifier (air conditioning device)
- 110: controller
- 120: generator
- 131: schedule information

## Claims

1. An environment control system that controls an environment of a space in which a user performs an intellectual task, the environment control system comprising:
a controller which performs scene control for reproducing one or more predetermined scenes in the space by controlling one or more luminaires that emit illumination light that illuminates a predetermined area in the space and one or more air conditioning devices that air-condition the space,
wherein the one or more predetermined scenes include:
a concentration scene that causes the user to concentrate on the intellectual task; and
a rest scene that eases the concentration of the user, and
the controller switches between concentration scene control for reproducing the concentration scene and rest scene control for reproducing the rest scene when a predetermined condition is satisfied.

2. The environment control system according to claim 1,
wherein the one or more luminaires include:
a first luminaire that emits first illumination light that illuminates a work area in which the user performs the intellectual task; and
a second luminaire that emits second illumination light that illuminates the space in entirety, and
the controller:
causes the first luminaire to emit the first illumination light and the second luminaire to emit the second illumination light under the concentration scene control; and
causes the first luminaire to not emit the first illumination light and the second luminaire to emit the second illumination light under the rest scene control.

3. The environment control system according to claim 2,
wherein, under the concentration scene control, an illuminance of the second illumination light in the work area is lower than an illuminance of the first illumination light in the work area.

4. The environment control system according to claim 2 or 3,
wherein the one or more luminaires further include a third luminaire that emits third illumination light that illuminates an area other than the work area, and
under the rest scene control, the controller causes the third luminaire to emit the third illumination light.

5. The environment control system according to any one of claims 1 to 4,
wherein the controller sets a color temperature of the illumination light lower for the rest scene control than for the concentration scene control.

6. The environment control system according to any one of claims 1 to 5,
wherein the one or more air conditioning devices include an air conditioning device that adjusts a temperature in the space, and
the controller sets a temperature setting of the air conditioning device that adjusts the temperature higher for the rest scene control than for the concentration scene control.

7. The environment control system according to claim 6,
wherein under the rest scene control, the controller adjusts the temperature setting to maintain a rate of increase in the temperature in the space below a predetermined value.

8. The environment control system according to any one of claims 1 to 7,
wherein the one or more air conditioning devices include an air conditioning device that adjusts a humidity in the space, and
the controller sets a humidity setting of the air conditioning device that adjusts the humidity higher for the rest scene control than for the concentration scene control.

9. The environment control system according to any one of claims 1 to 8,
wherein the one or more air conditioning devices include an air conditioning device that generates airflow in the space, and
under the rest scene control, the controller causes the air conditioning device that generates the airflow to generate airflow that does not directly contact the user.

10. The environment control system according to any one of claims 1 to 9, further comprising:
a generator that obtains an implementation history of the concentration scene control and the rest scene control, and, based on the implementation history, generates schedule information indicating a timing for switching between the concentration scene control and the rest scene control,
wherein the controller switches between the concentration scene control and the rest scene control at the timing indicated by the schedule information as the predetermined condition.

11. The environment control system according to any one of claims 1 to 9,
wherein the controller switches between the concentration scene control and the rest scene control at a predetermined timing based on a day of week and a time of day as the predetermined condition.

12. An environment control method for controlling an environment of a space in which a user performs an intellectual task, the method comprising:
performing scene control for reproducing one or more predetermined scenes in the space by controlling one or more luminaires that emit illumination light that illuminates a predetermined area in the space and one or more air conditioning devices that air-condition the space,
wherein the one or more predetermined scenes include:
a concentration scene that causes the user to concentrate on the intellectual task; and
a rest scene that eases the concentration of the user, and
the performing includes switching between concentration scene control for reproducing the concentration scene and rest scene control for reproducing the rest scene when a predetermined condition is satisfied.

13. A program for causing a computer to execute the environment control method according to claim 12.
